# FASCICULE DE BREVET EUROPEEN

(11) **EP 1 428 705 B1**
(45) Date de publication et mention de la délivrance du brevet: **22.10.2008**
(21) Numéro de dépôt: 03364038.4
(22) Date de dépôt: 12.12.2003
(51) Int. Cl.: B60J 1/20, B60R 5/04

(54) **Dispositif d'occultation multi-positions pour véhicule automobile, et véhicule correspondant**
Mehrstufig einstellbare Sonnenschutzeinrichtung für Kraftfahrzeuge und KFZ mit solch einer Einrichtung
Multi-positional sun blind for automotive vehicles and vehicle with such a blind

(30) Priorité: 13.12.2002 FR 0216062
(43) Date de publication de la demande: 16.06.2004
(73) Titulaire: Wagon SAS, 79300 Bressuire (FR)
(72) Inventeur: Devanne, Christophe, 79300 Chambroutet (FR)
(74) Mandataire: Bioret, Ludovic

(56) Documents cités:
- EP-A- 1 211 111
- EP-A- 1 225 094
- DE-A- 10 019 787
- FR-A- 2 792 257
- US-B1- 6 196 626

## Description

Le domaine de l'invention est celui des dispositifs d'occultation pour véhicule, par exemple pour une baie et/ou une ouverture ménagée dans le pavillon d'un véhicule. Plus précisément, l'invention concerne notamment les stores à enrouleur, du type mettant en oeuvre une toile d'occultation mobile entre une position repliée et une position déployée, en particulier, mais non exclusivement, pour un pavillon de véhicule.

De façon assez répandue, les pavillons des véhicules automobiles sont pourvus d'une baie et/ou d'une ouverture vitrée.

Une tendance actuelle est de proposer des véhicules automobiles présentant de plus en plus de surfaces vitrées. On cherche donc à augmenter tant que faire se peut la surface vitrée des portes latérales, des pare-brises et des lunettes arrières, et également des pavillons.

Les objectifs de cette tendance sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique général du véhicule ;

On comprend aisément qu'il est nécessaire de prévoir des moyens d'occultation, pour protéger l'habitacle et ses occupants du soleil. Diverses solutions ont été proposées pour limiter le passage des rayons du soleil, notamment en utilisant des vitres teintées ou en rapportant un motif filtrant sur la vitre par sérigraphie.

On propose également souvent un ou plusieurs stores. Les stores à enrouleur connus, comprenant une toile mobile entre une position déployée et une position repliée, du type de ceux utilisés pour les pare-brises, les vitres latérales ou les lunettes arrières, ont ainsi été adaptés et/ou perfectionnés en vue d'être mis en oeuvre en regard de pavillons vitrés.

Du fait notamment de la grande distance sur laquelle peuvent s'étendre de tels stores, il apparaît souhaitable que leur déploiement puisse être modulable, c'est-à-dire qu'un store ne doive pas être obligatoirement intégralement déployé, mais qu'il puisse au contraire être déployé de façon partielle, par exemple pour conserver une certaine luminosité, ou pour permettre à plusieurs passagers de choisir sélectivement de se protéger ou non des rayons du soleil.

Dans le cas des stores motorisés, il est relativement aisé de déployer et de maintenir la toile en différentes positions intermédiaires d'occultation. En effet, la barre de tirage de ces stores est déplacée le long de rails à l'aide de moyens d'entraînement qui peuvent maintenir à eux-seuls la barre de tirage dans la position qu'elle occupe lors de l'arrêt des moyens de motorisation. Un tel store est connu du document EP 1 211 111.

Dans le cas des stores manuels, cela n'est pas aussi simple. En effet, des moyens de rappel sont prévus pour commander le repliement de la toile. Dès que l'utilisateur lâche la toile (ou plus précisément la barre de tirage) dans une position intermédiaire de déploiement, celle-ci revient automatiquement dans sa position repliée. Il est nécessaire de prévoir des moyens d'accrochage de la barre de tirage pour maintenir la toile en position complètement déployée, ceci pour éviter que la toile ne se ré-enroule sous l'effet des moyens de rappel élastiques généralement couplés au tube enrouleur du store pour faciliter le repliement de la toile.

Il n'existe aucune solution efficace et simple permettant, pour les stores manuels, d'arrêter le store dans une ou plusieurs positions intermédiaires.

On pourrait envisager de rapporter au voisinage de la baie des moyens d'accrochage de la barre de tirage, constitués par exemple de crochets, de bandes auto-agrippantes,... Mais cela supposerait des manipulations relativement complexes (dans plusieurs directions) et non instinctives pour l'utilisateur. En outre, ces moyens d'accrochage seraient apparents à l'intérieur de l'habitacle du véhicule, ce qui n'est pas acceptable, pour des raisons de sécurité, d'ergonomie et d'esthétique (notamment dans le cas d'un pavillon en verre).

En conséquence, il n'existe pas à l'heure actuelle de store manuel permettant de déployer la toile en une ou plusieurs positions intermédiaires.

L'invention a notamment pour objectif de pallier ces inconvénients de l'art antérieur.

Plus précisément, l'invention a pour objectif de proposer un store d'occultation manuel qui permette le déploiement de la toile en différentes positions intermédiaires, ceci sans nuire à l'esthétique de la baie au voisinage de laquelle le store est monté, et/ou sans encombrer l'environnement de cette baie.

L'invention a aussi pour objectif de fournir un tel store dans lequel les moyens d'accrochage de la barre de tirage en position de déploiement complet de la toile sont totalement discrets.

L'invention a également pour objectif de fournir un tel store d'occultation qui soit ergonomique et d'utilisation aisée et instinctive.

Un autre objectif de l'invention est de fournir un tel store d'occultation qui soit simple de conception et facile à mettre en oeuvre.

Ces objectifs, ainsi que d'autres qui apparaîtront par la suite, sont atteints grâce à l'invention qui a pour objet un dispositif d'occultation pour véhicule, du type mettant en oeuvre une toile mobile entre une position repliée et au moins deux positions déployées, et guidée par au moins un organe d'entraînement mobile le long de deux rails de guidage, ledit organe d'entraînement portant à ses extrémités des éléments coulissants circulant à l'intérieur desdits rails. Selon l'invention, lesdits rails présentent, sur au moins une portion du parcours de l'élément coulissant correspondant, deux rainures parallèles et reliées au moins aux extrémités de la rainure la plus courte, une première rainure, dite piste aller, étant dédiée au déploiement de ladite toile et une seconde rainure, dite piste retour, étant dédiée au repliement, et lesdits rails présentent au moins un élément d'arrêt en une position intermédiaire de déploiement de ladite toile, ménagé entre lesdites rainures et prévu pour recevoir et maintenir l'élément coulissant correspondant.

Ainsi, il est possible de déployer partiellement le store, et sa manipulation, tant pour le déploiement que pour le repliement, sont très simples.

Avantageusement, un ensemble de guidage de l'élément coulissant est associé à chacun desdits éléments d'arrêt, de façon à permettre, à partir de la position intermédiaire de déploiement correspondante, un déploiement plus important de ladite toile et/ou un retour direct dans la position repliée.

De façon préférentielle, le ou lesdits ensembles de guidage sont conçus de façon que, quel que soit le déplacement souhaité de ladite toile, l'utilisateur exerce toujours une action unique de déplacement parallèle auxdites rainures, dans la direction du déploiement de ladite toile, en agissant contre des moyens de rappel tendant à ramener la toile dans sa position repliée.

On obtient ainsi une mise en oeuvre très simple, et instinctive (un seul mouvement dans une seule direction) pour toutes les manoeuvres possibles.

Selon un mode de réalisation avantageux, ledit ensemble de guidage comprend un premier ergot formé dans ladite piste aller, guidant ledit élément coulissant vers ledit élément d'arrêt, lorsque l'utilisateur cesse son action de déploiement et que ledit premier ergot a été franchi.

Préférentiellement, ledit ensemble de guidage comprend un îlot central, guidant ledit élément coulissant vers ledit élément d'arrêt, lorsque l'utilisateur cesse son action de déploiement et que ledit élément d'arrêt a été franchi.

Selon un autre aspect de l'invention, ledit ensemble de guidage peut également comprendre un second ergot formé dans ladite piste retour, guidant ledit élément coulissant vers ladite piste aller, via une rainure de liaison, lorsque l'utilisateur reprend une action de déploiement de ladite toile à partir de la position intermédiaire correspondant audit ensemble de guidage.

Avantageusement, ledit ensemble de guidage comprend un îlot central, guidant ledit élément coulissant vers ladite piste aller, via une rainure de liaison, lorsque l'utilisateur reprend une action de déploiement de ladite toile à partir de la position intermédiaire correspondant audit ensemble de guidage.

Il peut s'agir du même îlot que celui mentionné plus haut, ou un élément indépendant.

De façon avantageuse, le dispositif comprend un élément d'arrêt correspondant à un déploiement complet de ladite toile, formé dans une rainure de liaison reliant lesdites pistes aller et retour.

Dans ce cas, ladite rainure de liaison présente préférentiellement un ensemble de guidage dudit élément vers ledit élément d'arrêt, en cas de déploiement, et/ou vers ladite piste retour, en cas de repliement.

Selon un mode de réalisation préférentiel, le dispositif de l'invention comprend une rainure de liaison reliant une extrémité de ladite piste retour à ladite piste aller, cette dernière se prolongeant jusqu'à la position de repliement de la toile, de façon que ledit élément coulissant utilise ladite piste aller pour le déploiement et le repliement pour la portion s'étendant jusqu'à la première position intermédiaire de déploiement.

De façon avantageuse, lesdits éléments coulissants comprennent au moins un coulisseau et au moins un doigt monté mobile en translation sur ledit coulisseau, de façon que ledit doigt puisse se déplacer transversalement par rapport audit ou auxdits rails.

Le dispositif d'occultation de l'invention peut notamment être mis en oeuvre pour occulter au moins une portion :
- d'un pavillon en verre ;
- d'un toit ouvrant ;
- d'une vitre latérale ;
- d'une vitre de hayon arrière ;
- d'un coffre à bagages.

L'invention concerne également les véhicules équipés d'au moins un dispositif d'occultation tel que décrit précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 est une vue d'ensemble en perspective d'un rail de guidage d'un dispositif d'occultation selon l'invention ;
- la figure 2 est une vue de détail du rail de guidage illustré par la figure 1 ;
- les figures 3 et 4 sont deux autres vues de détail du rail de la figure 1, illustrant la coopération des éléments coulissants avec les moyens d'arrêt terminaux du rail.

Comme mentionné précédemment, l'invention propose une structure particulière de guidage formée, dans les rails de guidage du déploiement et du repliement de la toile d'un store manuel comprenant deux rainures, respectivement pour le déploiement (« piste aller ») et le repliement (« piste retour ») et, des moyens pour retenir les moyens d'entraînement de la toile en différentes positions, dont au moins une position intermédiaire.

On rappelle qu'un tel store manuel comprend une toile d'occultation solidaire par l'une de ses extrémités d'un tube d'enroulement, et par l'autre de ses extrémités d'une barre de tirage (formant moyens d'entraînement de la toile), le tube d'enroulement étant couplé à des moyens de rappel élastiques pour assurer et/ou assister le ré-enroulement de la toile.

Notamment dans le cas des stores destinés à occulter des surfaces relativement larges, tel que par exemple des pavillons vitrés de véhicule, on prévoit également des rails de guidage du coulissement de la barre de tirage, celle-ci portant alors à chacune de ses extrémités des patins de coulissement, coopérant avec ces rails.

L'invention concerne plus précisément de tels rails.

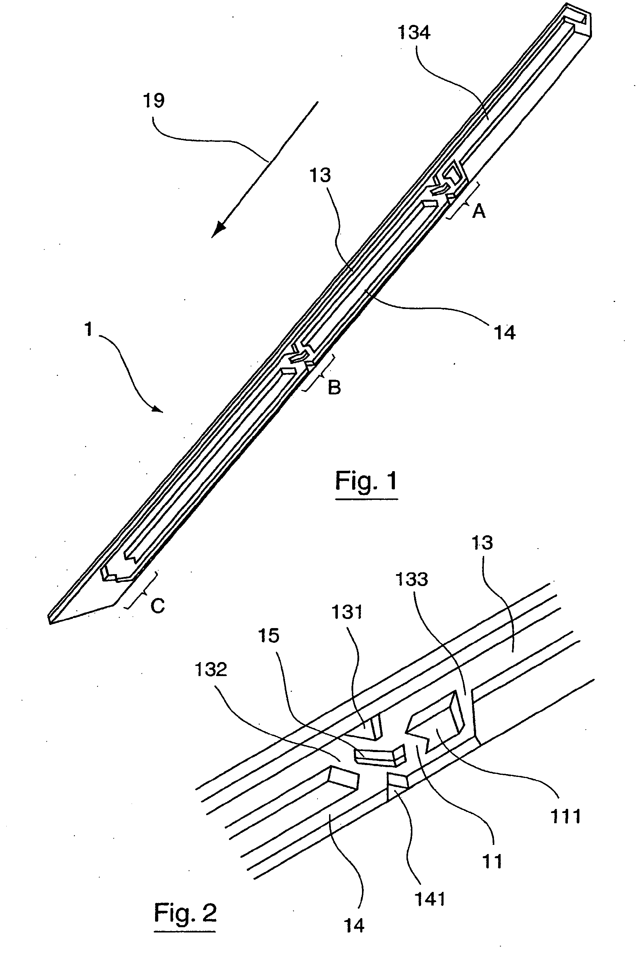

La figure 1 illustre un des rails de guidage d'un dispositif d'occultation selon un mode de réalisation de l'invention. Ce mode de réalisation présente l'avantage d'être très simple et instinctif à manipuler par un utilisateur, puisque comme on le verra par la suite, aucun mouvement particulier n'est nécessaire pour arrêter le store dans une position intermédiaire ou l'en libérer. Un seul type de mouvement, dans une seule direction, est suffisant.

Le rail de guidage 1 selon l'invention est destiné à être monté au voisinage d'une vitre (ou d'une baie) de telle sorte que le tube d'enroulement du store soit placé du côté de l'extrémité du rail apparaissant sur la droite de la figure 1.

La structure du rail comprend deux rainures parallèles 13 et 14, attribuées à des fonctions distinctes :
- la rainure 13, ou piste aller, sert au déploiement de la toile ;
- la rainure 14, ou piste retour, sert au repliement de la toile

Une partie 134 de la rainure 13 est cependant commune aux deux déplacements, dans la partie correspondant au déplacement minimum de la toile.

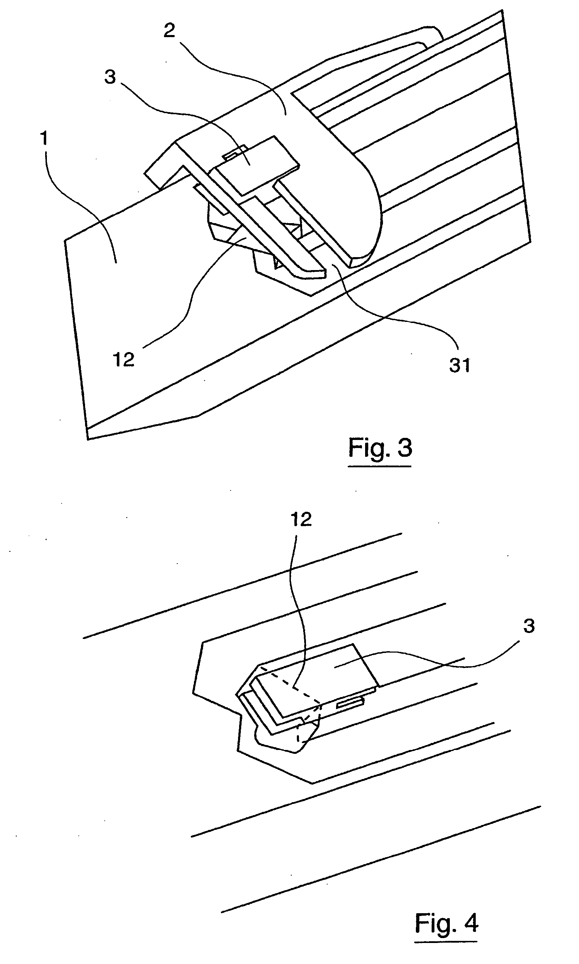

Ces rainures son dimensionnées pour recevoir et guider un doigt solidaire d'un coulisseau relié à la barre de tirage (figures 3 et 4).

Selon l'invention, au moins un élément d'arrêt 11 est prévu, correspondant à une position de déploiement intermédiaire. Sur la figure 1, on a prévu deux positions d'arrêt intermédiaire, correspondant aux ensembles A et B. Il est bien sûr possible d'augmenter ce nombre, en dupliquant l'ensemble B.

Un ensemble de structure proche C est également prévu pour la position de déploiement complet.

La figure 2 est une vue agrandie de l'ensemble A du rail de guidage 1.

Tel que cela apparaît sur la figure 2, le rail de guidage 1 comprend une première rainure 13, dite rainure de déploiement, et une deuxième rainure 14, dite rainure de repliement, un doigt porté par les moyens de coulissement solidaires de la barre de tirage étant susceptible de circuler alternativement dans l'une ou l'autre de ces rainures.

Selon le présent mode de réalisation, l'élément d'arrêt 11 est porté par un îlot 111 s'étendant entre la rainure de déploiement 13 et la rainure de repliement 14 (et définissant une paroi de ces dernières), l'élément d'arrêt étant formé par une cavité ou une surface de réception ménagée dans cet îlot 111 et formant logement pour le doigt de l'élément coulissant de la barre de tirage.

La rainure 13 présente un ergot 131, ces ergots formant moyens d'orientation du doigt coulissant vers l'élément d'arrêt 111 correspondant, lorsque le doigt a dépassé (en déploiement) cet ergot et que la barre de tirage est relachée.

On notera que cet ergot 131, outre le fait d'exercer la fonction de guidage qui vient d'être mentionnée, assure également une fonction d'indexation, en permettant à l'utilisateur de repérer la position dans laquelle la toile peut être maintenue.

Par ailleurs, le rail de guidage 1 comprend également un îlot de guidage 15 qui permet d'affiner le guidage du doigt des moyens de coulissement entre ces différents éléments.

Enfin, la piste de retour 14 présente un ergot 141, sensiblement symétrique de l'ergot 131, permettant le guidage du doigt vers la piste aller 13, lorsque l'on le libère de l'élément de retenue 111.

Cet ergot 141 pourra être supprimé dans certains modes de réalisation adaptés, pour permettre un repliement plus efficace et sans bruit.

Les ergots 131, 141 et l'îlot de guidage 15 définissant des rainures de liaison 132, 133 permettant le passage du doigt des moyens de coulissement de la rainure de déploiement 13 à la rainure de repliement 14, et inversement.

L'ensemble des moyens qui viennent d'être décrits en référence à la figure 2 peuvent aisément être reproduits le long du rail de guidage 1 de façon à proposer deux (ou plus) positions intermédiaires de déploiement de la toile.

L'ensemble A comprend en outre une rainure de liaison 135 qui permet de guider le doigt en cours de repliement de la piste retour 14 vers la portion initiale 134 de la piste aller.

L'ensemble d'extrémité C comprend également un élément d'arrêt 12, formé dans une rainure de liaison 16, comprenant un ergot 17 pour le guidage du doigt.

En référence à la figure 3, les moyens de coulissement solidaires de la barre de tirage du store comprennent un coulisseau 2 susceptible d'être déplacé le long du rail 1, et un patin monté mobile en translation sur ce coulisseau 2.

Ce patin comprend lui-même :
- une tête 3 rainurée, ses rainures étant montées à chevauchement sur les bords d'une fente 31 ménagée dans le coulisseau 2 de telle sorte que la tête 3 puisse se déplacer transversalement par rapport au rail 1 ;
- un doigt (non représenté) porté par la tête 3 et s'étendant sous celle-ci de façon à pénétrer les rainures du rail et à être guidées en coulissement par celles-ci.

La figure 4 (sur laquelle on a supprimé le coulisseau 2 à des fins de clarté) illustre la position occupée par la tête 3 (et par conséquent du doigt porté par la tête) des moyens de coulissement lors d'un déploiement complet de la toile d'occultation, en regard des moyens de retenue terminaux 12.

Tel que cela apparaît plus clairement sur la figure 1, ces moyens de retenue terminaux 12 sont obtenus en prévoyant une cavité à laquelle le doigt des moyens de coulissement accède par l'intermédiaire d'une rainure 16 qui relie les rainures 13 et 14.

La coopération d'un élément coulissant avec le rail de guidage qui viennent d'être décrits va maintenant être explicité plus en détails.

On rappelle que toutes les actions effectuées par un utilisateur sont obtenues en agissant uniquement dans une direction (flèche 19) et/ou en relâchant (ou en laissant aller) la barre de tirage. Aucune action transversale n'est nécessaire pour bloquer ou débloquer la toile, quelle que soit sa position.

Lorsque la toile du store est enroulée, le doigt de coulissement se trouve à l'extrémité de la rainure de déploiement 13 (sur la partie droite de la figure 1).

Lors du déroulement de la toile (c'est-à-dire sous l'action de l'utilisateur selon la flèche 19), le doigt est guidé en coulissement à l'intérieur de la portion 134 de la rainure 13 jusqu'au premier ergot 131, puis au-delà de celui-ci. La petite résistance et/ou le petit bruit que créée cet ergot indique à l'utilisateur qu'il est au niveau de la première position intermédiaire.

Le doigt se trouve alors entre l'ergot 131 et l'îlot 15 ou, si l'on a continué à agir sur la barre de tirage, à nouveau dans la rainure 13, où il a été guidé notamment par l'îlot 15.

A ce stade, deux situations peuvent se présenter :
- si le déploiement de la toile se poursuit sous l'action de l'utilisateur sur la barre de tirage, le doigt se déplace dans la rainure 13 (après avoir franchi la position correspondante à l'ergot 131), et le déploiement peut être poursuivi jusqu'à la position d'arrêt intermédiaire suivante ou jusqu'à la position de déploiement complet ;
- si l'utilisateur relâche la barre de tirage, le doigt est guidé par l'îlot 15 et l'ergot 131 le doigt vient se loger dans les moyens de retenue 11 de l'îlot 111, ceci sous l'effet des moyens de rappel élastiques agissant sur la toile par l'intermédiaire du tube d'enroulement, la toile étant alors maintenue dans la position correspondante.

A partir d'une position intermédiaire, lorsque l'utilisateur agit à nouveau dans le sens de la flèche 19, il libère le doigt de son logement. Le doigt est guidé vers la piste retour 14 par la partie 151 de l'îlot 15.

A nouveau, deux situation se présentent :
- si l'utilisateur continue à agir sur la barre de tirage dans le sens de la flèche 19, le doigt est guidé, notamment par l'îlot 15 et l'ergot 141, dans la rainure de liaison 132, et reprend la piste aller 13, jusqu'à une position de déploiement suivante ;
- si l'utilisateur relâche la barre de tirage, le doigt se trouve dans la piste de retour, et est guidé par celle-ci jusqu'à la rainure de liaison 135 puis, par la partie commune 134 de la piste aller, jusqu'à la position de repliement.

Dans la position terminale, lorsqu'on relâche la barre de tirage, l'ergot 17 guide le doigt vers le logement 12. Il suffit de retirer légèrement sur la barre de tirage puis de relâcher, pour qu'on obtienne un retour vers la position de repliement, via la piste de retour 14.

Selon une autre approche, on peut prévoir que lors du repliement, plusieurs cas de figure peuvent aussi être envisagés :
- soit l'utilisateur décide d'exploiter l'un des moyens de retenue intermédiaires, auquel cas le doigt est dévié vers ce moyen de retenue par un ergot 141 correspondant ;
- soit l'utilisateur soumet intégralement la toile à l'action de ré-enroulement imposée par le tube sous l'effet des moyens de rappel élastiques, auquel cas le doigt pourra être ré-orienté vers la rainure 13 par l'une des rainures de guidage 133 correspondante, pour retourner jusqu'à l'extrémité de cette rainure 13, dans la position initiale correspondant à un repliement complet de la toile.

Bien entendu, en fonction du nombre et de la position des moyens de retenue intermédiaires, différentes utilisations et plusieurs autres déplacements du doigt de moyens de coulissement à l'intérieur du rail sont envisageables.

Par ailleurs, de nombreuses variantes peuvent être envisagées. Ainsi, dans une version simplifiée, on peut prévoir qu'il n'y a pas de rainure de liaison intermédiaire (132, 133) entre les pistes aller et retour. Dans ce cas, il est nécessaire de déployer complètement la toile (jusqu'à la rainure 16) pour obtenir le repliement.

## Revendications

1. Dispositif d'occultation pour véhicule, du type mettant en oeuvre une toile mobile entre une position repliée et au moins deux positions déployées, et guidée par au moins un organe d'entraînement mobile le long de deux rails de guidage, ledit organe d'entraînement portant à ses extrémités des éléments coulissants circulant à l'intérieur desdits rails,
**caractérisé en ce que** lesdits rails (1) présentent, sur au moins une portion du parcours de l'élément coulissant correspondant, deux rainures parallèles et reliées au moins aux extrémités de la rainure la plus courte, une première rainure (13), dite piste aller, étant dédiée au déploiement de ladite toile et une seconde rainure (14), dite piste retour, étant dédiée au repliement,
et **en ce que** lesdits rails (1) présentent au moins un élément d'arrêt (11) en une position intermédiaire de déploiement de ladite toile, ménagé entre lesdites rainures (13, 14) et prévu pour recevoir et maintenir l'élément coulissant correspondant.

2. Dispositif d'occultation selon la revendication 1, **caractérisé en ce qu'**un ensemble de guidage de l'élément coulissant est associé à chacun desdits éléments d'arrêt (11), de façon à permettre, à partir de la position intermédiaire de déploiement correspondante, un déploiement plus important de ladite toile et/ou un retour direct dans la position repliée.

3. Dispositif d'occultation selon la revendication 2, **caractérisé en ce que** le ou lesdits ensembles de guidage sont conçus de façon que, quel que soit le déplacement souhaité de ladite toile, l'utilisateur exerce toujours une action unique de déplacement parallèle auxdites rainures, dans la direction du déploiement de ladite toile, en agissant contre des moyens de rappel tendant à ramener la toile dans sa position repliée.

4. Dispositif d'occultation selon l'une quelconque des revendications 2 et 3, **caractérisé en ce que** ledit ensemble de guidage comprend un premier ergot (131) formé dans ladite piste aller (13), guidant ledit élément coulissant vers ledit élément d'arrêt (11), lorsque l'utilisateur cesse son action de déploiement et que ledit premier ergot (131) a été franchi.

5. Dispositif d'occultation selon l'une quelconque des revendications 2 à 4, **caractérisé en ce que** ledit ensemble de guidage comprend un îlot central (15), guidant ledit élément coulissant vers ledit élément d'arrêt (11), lorsque l'utilisateur cesse son action de déploiement et que ledit élément d'arrêt (11) a été franchi.

6. Dispositif d'occultation selon l'une quelconque des revendications 2 à 5, **caractérisé en ce que** ledit ensemble de guidage comprend un second ergot (141) formé dans ladite piste retour (14), guidant ledit élément coulissant vers ladite piste aller (13), via une rainure de liaison (132), lorsque l'utilisateur reprend une action de déploiement de ladite toile à partir de la position intermédiaire correspondant audit ensemble de guidage.

7. Dispositif d'occultation selon l'une quelconque des revendications 2 à 6, **caractérisé en ce que** ledit ensemble de guidage comprend un îlot central (15), guidant ledit élément coulissant vers ladite piste aller (13), via une rainure de liaison (132), lorsque l'utilisateur reprend une action de déploiement de ladite toile à partir de la position intermédiaire correspondant audit ensemble de guidage.

8. Dispositif d'occultation selon l'une quelconque des revendications 1 à 7, **caractérisé en ce qu'**il comprend un élément d'arrêt (12) correspondant à un déploiement complet de ladite toile, formé dans une rainure de liaison (16) reliant lesdites pistes aller et retour.

9. Dispositif d'occultation selon la revendication 8, **caractérisé en ce que** ladite rainure de liaison (16) présente un ensemble de guidage dudit élément vers ledit élément d'arrêt (12), en cas de déploiement, et/ou vers ladite piste retour (14), en cas de repliement.

10. Dispositif d'occultation selon l'une quelconque des revendications 1 à 9, **caractérisé en ce qu'**il comprend une rainure de liaison (133) reliant une extrémité de ladite piste retour (14) à ladite piste aller (13), cette dernière se prolongeant jusqu'à la position de repliement de la toile, de façon que ledit élément coulissant utilise ladite piste aller pour le déploiement et le repliement pour la portion s'étendant jusqu'à la première position intermédiaire de déploiement.

11. Dispositif d'occultation selon l'une quelconque des revendications 1 à 10, **caractérisé en ce que** lesdits éléments coulissants comprennent au moins un coulisseau (2) et au moins un doigt monté mobile en translation sur ledit coulisseau (2), de façon que ledit doigt puisse se déplacer transversalement par rapport audit ou auxdits rails (1).

12. Dispositif d'occultation selon l'une quelconque des revendications 1 à 11, **caractérisé en ce qu'**il est mis en oeuvre pour occulter au moins une portion :
- d'un pavillon en verre ;
- d'un toit ouvrant ;
- d'une vitre latérale ;
- d'une vitre de hayon arrière ;
- d'un coffre à bagages.

13. Véhicule comprenant au moins un dispositif d'occultation, du type mettant en oeuvre une toile mobile entre une position repliée et au moins deux positions déployées, et guidée par au moins un organe d'entraînement mobile le long de deux rails de guidage, ledit organe d'entraînement portant à ses extrémités des éléments coulissants circulant à l'intérieur desdits rails,
**caractérisé en ce que** lesdits rails (1) présentent, sur au moins une portion du parcours de l'élément coulissant correspondant, deux rainures parallèles et reliées au moins aux extrémités de la rainure la plus courte, une première rainure (13), dite piste aller, étant dédiée au déploiement de ladite toile et une seconde rainure (14), dite piste retour, étant dédiée au repliement,
et **en ce que** lesdits rails (1) présentent au moins un élément d'arrêt (11) en une position intermédiaire de déploiement de ladite toile, ménagé entre lesdites rainures (13, 14) et prévu pour recevoir et maintenir l'élément coulissant correspondant.

## Claims

1. Occulting device for a vehicle, said device being of the type using a web which can be moved between a folded-up position and at least two deployed positions and is guided by at least one entraining component which can be moved along two guide rails, the entraining component carrying, at its ends, sliding elements which run inside the said rails,
**characterised in that** the rails (1) have, over at least a portion of the path of the corresponding sliding element, two grooves which are parallel and are connected at least to the ends of the shortest groove, a first groove (13), which is referred to as the "outward track", being dedicated to the deployment of the web and a second groove (14), which is referred to as the "return track", being dedicated to the folding-up operation,
and **in that** the rails (1) have at least one stop element (11) at an intermediate position of deployment of the web, which stop element is arranged between the grooves (13, 14) and is intended to receive and hold the corresponding sliding element.

2. Occulting device according to claim 1, **characterised in that** a unit for guiding the sliding element is associated with each of the stop elements (11) in such a way as to permit, starting from the corresponding intermediate position of deployment, greater deployment of the web and/or a direct return to the folded-up position.

3. Occulting device according to claim 2, **characterised in that** the guide element or elements is/are designed in such a way that, whatever the desired displacement of the web, the user always exerts a single action of displacement parallel to the said grooves, in the direction of deployment of the cloth, while acting against returning means which tend to bring the web back into its folded-up position.

4. Occulting device according to either of claims 2 or 3, **characterised in that** the guide unit comprises a first lug (131) which is formed in the outward track (13) and guides the said sliding element towards the stop element (11) when the user discontinues his deploying action and when the first lug (131) has been crossed.

5. Occulting device according to any of claims 2 to 4, **characterised in that** the guide unit comprises a small central island (15) which guides the sliding element towards the stop element (11) when the user discontinues his deploying action and when the stop element (11) has been crossed.

6. Occulting device according to any of claims 2 to 5, **characterised in that** the guide unit comprises a second lug (141) which is formed in the return track (14) and guides the sliding element towards the outward track (13), via a linking groove (132), when the user resumes an action for deploying the web, starting from the intermediate position corresponding to the guide unit.

7. Occulting device according to any of claims 2 to 6, **characterised in that** the guide unit comprises a small central island (15) which guides the sliding element towards the outward track (13), via a linking groove (132), when the user resumes an action for deploying the web, starting from the intermediate position corresponding to the guide unit.

8. Occulting device according to any of claims 1 to 7, **characterised in that** it comprises a stop element (12) which corresponds to a complete deployment of the web and is formed in a linking groove (16) connecting the outward and return tracks.

9. Occulting device according to claim 8, **characterised in that** the linking groove (16) has a unit for guiding the element towards the stop element (12), in the case of deployment, and/or towards the return track (14), in the case of fold-up.

10. Occulting device according to any of claims 1 to 9, **characterised in that** it comprises a linking groove (133) connecting one end of the return track (14) to the outward track (13), the latter being prolonged as far as the position of fold-up of the web, in such a way that the sliding element uses the outward track for deployment and fold-up for the portion which extends as far as the first intermediate position of deployment.

11. Occulting device according to any of claims 1 to 10, **characterised in that** the sliding elements comprise at least one slide (2) and at least one finger which is mounted so as to be mobile in translation on the slide (2), in such a way that the finger is capable of transverse displacement in relation to the rail or rails (1).

12. Occulting device according to any of claims 1 to 11, **characterised in that** it is used in order to occult at least one portion:
- of a glass roof;
- of an opening roof;
- of a side window;
- of a rear tailgate window;
- of a cargo space.

13. Vehicle comprising at least one occulting device of the type using a web which can be moved between a folded-up position and at least two deployed positions and is guided by at least one entraining component which can be moved along two guide rails, the entraining component carrying, at its ends, sliding elements which run inside the rails,
**characterised in that** the said rails (1) have, over at least a portion of the path of the corresponding sliding element, two grooves which are parallel and are connected at least to the ends of the shortest groove, a first groove (13), which is referred to as the "outward track", being dedicated to the deployment of the web and a second groove (14), which is referred to as the "return track", being dedicated to the folding-up operation,
and **in that** the rails (1) have at least one stop element (11) at an intermediate position of deployment of the web, which stop element is arranged between the grooves (13, 14) and is intended to receive and hold the corresponding sliding element.

## Patentansprüche

1. Abdeckeinrichtung für Kraftfahrzeuge mit einer Rollobahn, die zwischen einer eingezogenen Position und mindestens zwei ausgezogenen Positionen beweglich ist und von mindestens einem entlang zweier Führungsschienen beweglichen Antriebsorgan geführt wird, das an seinen Enden Gleitelemente trägt, die in diesen Schienen laufen,
**dadurch gekennzeichnet, dass** die Schienen (1) zumindest über einen Teil des Weges des entsprechenden Gleitelements zwei parallele und mindestens an den Enden der kürzesten Nut verbundene Nuten aufweisen, wobei die erste Nut (13), der so genannte Hinweg, zum Ausziehen der Rollobahn bestimmt ist und die zweite Nut (14), der so genannte Rückweg, zum Einziehen,
und dass die Schienen (1) mindestens ein Arretierungsteil (11) in einer Ausziehzwischenposition der Rollobahn aufweisen, das zwischen den Nuten (13, 14) angeordnet ist und dazu vorgesehen ist, das entsprechende Gleitelement aufzunehmen und zu halten.

2. Abdeckeinrichtung nach Anspruch 1, **dadurch gekennzeichnet, dass** mit jedem der Arretierungsteile (11) eine Führungsanordnung für das Gleitelement kombiniert ist, so dass ausgehend von der entsprechenden Ausziehzwischenposition ein weiteres Ausziehen der Rollobahn und/oder ein direktes Zurückkehren in die eingezogene Position möglich ist.

3. Abdeckeinrichtung nach Anspruch 2, **dadurch gekennzeichnet, dass** die Führungsanordnung(en) so aufgebaut ist(sind), dass der Benutzer unabhängig von der gewünschten Verschiebung der Rollobahn immer eine einzige Verschiebebewegung parallel zu den Nuten in Ausziehrichtung der Rollobahn ausführt, wobei er gegen die Rückholmittel einwirkt, die die Rollobahn in die eingezogene Position zurückführen sollen.

4. Abdeckeinrichtung nach einem beliebigen der Ansprüche 2 und 3, **dadurch gekennzeichnet, dass** die Führungsanordnung eine erste Nase (131) umfasst, die im Hinweg (13) ausgebildet ist und das Gleitelement zum Arretierungsteil (11) führt, wenn der Benutzer seine Ausziehbewegung stoppt und die erste Nase (131) überfahren wurde.

5. Abdeckeinrichtung nach einem beliebigen der Ansprüche 2 bis 4, **dadurch gekennzeichnet, dass** die Führungsanordnung einen mittigen Block (15) umfasst, der das Gleitelement zum Arretierungsteil (11) führt, wenn der Benutzer seine Ausziehbewegung stoppt und das Arretierungsteil (11) überfahren wurde.

6. Abdeckeinrichtung nach einem beliebigen der Ansprüche 2 bis 5, **dadurch gekennzeichnet, dass** die Führungsanordnung eine zweite Nase (141) umfasst, die im Rückweg (14) ausgebildet ist und das Gleitelement über eine Verbindungsnut (132) zum Hinweg (13) führt, wenn der Benutzer seine Bewegung zum Ausziehen der Rollobahn aus der entsprechenden Zwischenposition an der Führungsanordnung wiederaufnimmt.

7. Abdeckeinrichtung nach einem beliebigen der Ansprüche 2 bis 6, **dadurch gekennzeichnet, dass** die Führungsanordnung einen mittigen Block (15) umfasst, der das Gleitelement über eine Verbindungsnut (132) zum Hinweg (13) führt, wenn der Benutzer seine Bewegung zum Ausziehen der Rollobahn aus der entsprechenden Zwischenposition an der Führungsanordnung wiederaufnimmt.

8. Abdeckeinrichtung nach einem beliebigen der Ansprüche 1 bis 7, **dadurch gekennzeichnet, dass** sie ein Arretierungsteil (12) umfasst, das einem vollständigen Ausziehen der Rollobahn entspricht und in einer Verbindungsnut (16), die den Hin- und den Rückweg verbindet, ausgebildet ist.

9. Abdeckeinrichtung nach Anspruch 8, **dadurch gekennzeichnet, dass** die Verbindungsnut (16) eine Führungsanordnung für das Element zum Arretierungsteil (12) im Fall des Ausziehens und/oder zum Rückweg (14) im Fall des Einziehens aufweist.

10. Abdeckeinrichtung nach einem beliebigen der Ansprüche 1 bis 9, **dadurch gekennzeichnet, dass** sie eine Verbindungsnut (133) umfasst, die ein Ende des Rückweges (14) mit dem Hinweg (13) verbindet, wobei sich Letzterer bis zur eingezogenen Position der Rollobahn fortsetzt, so dass das Gleitelement den Hinweg für den Abschnitt, der sich bis zur ersten Ausziehzwischenposition erstreckt, beim Ausziehen und Einziehen benutzt.

11. Abdeckeinrichtung nach einem beliebigen der Ansprüche 1 bis 10, **dadurch gekennzeichnet, dass** die Gleitelemente mindestens einen Schieber (2) und mindestens einen verschieblich an diesem Schieber (2) angebrachten Finger umfassen, so dass sich dieser Finger quer zu der Schiene oder den Schienen (1) bewegen kann.

12. Abdeckeinrichtung nach einem beliebigen der Ansprüche 1 bis 11, **dadurch gekennzeichnet, dass** sie dazu dient, mindestens einen Teil abzudecken:
- eines Glasdachs;
- eines Schiebedachs;
- einer Seitenscheibe;
- einer Heckklappenscheibe;
- eines Kofferraums.

13. Kraftfahrzeug mit mindestens einer Abdeckeinrichtung mit einer zwischen einer eingezogenen und mindestens zwei ausgezogenen Positionen beweglichen Rollobahn, die von mindestens einem entlang von zwei Führungsschienen beweglichen Antriebsorgan geführt wird, das an seinen Enden Gleitelemente trägt, die in den Schienen laufen, **dadurch gekennzeichnet, dass** die Schienen (1) zumindest über einen Teil des Weges des entsprechenden Gleitelements zwei parallele und mindestens an den Enden der kürzesten Nut verbundene Nuten umfassen, wobei die erste Nut (13), der so genannte Hinweg, zum Ausziehen der Rollobahn bestimmt ist und die zweite Nut (14), der so genannte Rückweg, zum Einziehen,
und dass die Schienen (1) mindestens ein Arretierungsteil (11) in einer Ausziehzwischenposition der Rollobahn aufweisen, das zwischen den Nuten (13, 14) angeordnet ist und dazu vorgesehen ist, das entsprechende Gleitelement aufzunehmen und zu halten.
